# EUROPÄISCHE PATENTSCHRIFT

(11) **EP 4 006 267 B1**
(45) Veröffentlichungstag und Bekanntmachung des Hinweises auf die Patenterteilung: **10.04.2024**
(21) Anmeldenummer: 21182386.9
(22) Anmeldetag: 29.06.2021
(51) Int. Cl.: E04G 15/04, B66C 1/66, E04G 21/14, F16B 13/00, F16B 13/02, F16G 15/08, F16B 45/00, F16B 13/12

(54) **TRANSPORTANKERSYSTEM FÜR BETONTEIL**
CONCRETE PART TRANSPORT TANKER SYSTEM
SYSTÈME D'ANCRAGE DE TRANSPORT POUR UNE PIÈCE EN BÉTON

(30) Priorität: 30.11.2020 EP 20210558; 19.04.2021 EP 21169128
(43) Veröffentlichungstag der Anmeldung: 01.06.2022
(73) Patentinhaber: Weidner, Georg, 97854 Steinfeld (DE)
(72) Erfinder: Weidner, Georg, 97854 Steinfeld (DE)
(74) Vertreter: Götz, Georg Alois

(56) Entgegenhaltungen:
- EP-A1- 3 190 244
- EP-B1- 0 161 652
- EP-B1- 1 045 087
- WO-A1-2020/171775
- US-A- 4 615 554
- US-A1- 2017 298 617
- US-B2- 8 875 471
- Bgw Bohr Gmbh: "Build something great", , 31. Mai 2021 (2021-05-31), Seiten 1-233, XP055860946, Internet Gefunden im Internet: URL:https://www.bgw-bohr.de/pdf/Deutsch_Ge samt.pdf [gefunden am 2021-11-12]

## Beschreibung

Die Erfindung betrifft ein Transportankersystem zum Transportieren von Betonfertigteilen, insbesondere von dünnwandigen oder doppelwandigen Betonteilen, Sandwichkonstruktionen, Isolierwänden, Betonschächten und- röhren, umfassend einen Transportanker mit einem Schraubkanal, der nicht lösbar im Inneren des Betonfertigteils einbetonierbar ist, sowie einen ersten Aussparungskörper, der an den Transportanker angrenzend zur Ausbildung einer Aussparung lösbar im Inneren des Betonfertigteils anordenbar ist. Die Erfindung betrifft außerdem einen Transportanker für ein derartiges Transportankersystem, welcher Transportanker einen Schraubkanal aufweist, in den ein Lastaufnahmemittel des Transportankersystems einschraubbar ist. Die Erfindung betrifft außerdem die Verwendung eines derartigen Transportankersystems zum Transport einer Betondoppelwand.

Betonteile werden häufig als Betonfertigteile in Betonfertigteilwerken hergestellt und anschließend für den Einbau auf Baustellen transportiert. Die Herstellung erfolgt, indem der Beton in eine Schalform, die sogenannte Verschalung eingegossen wird, die Geometrie der Verschalung legt die Form des Betonfertigteils fest. Zum Transport dieser Betonfertigteile auf die und auf der Baustelle dient in der Regel ein Transportanker, der in das Betonfertigteil einbetoniert wird und mit externen Transportmitteln in Eingriff bringbar ist. Solche Transportanker können als Gewindeanker einen Schraubkanal mit einem Innengewinde aufweisen. In den Schraubkanal lässt sich ein sogenannter Abheber einschrauben, der zum Transport des Betonfertigteils mit einer Tragöse oder sonstigen Einrichtung zum Einhängen eines oder Verbinden mit einem externen Transport-, Anschlag- oder Zurrmittel ausgebildet ist.

Um die Transportanker im Betonteil zu platzieren, werden die Transportanker vor dem Ausgießen der Verschalung mit fließfähigem Beton temporär an der Innenwandung der Verschalung fixiert, sodass der Schraubkanal nach dem Aushärten des Betons und dem Entfernen der Verschalung mit einer Außenseite des Betonfertigteils abschließt und für den Abheber zugänglich ist. Der Abheber kann nach erfolgtem Transport bzw. nach dem Einbau aus dem Schraubkanal gelöst und wiederverwendet werden, der einbetonierte Transportanker verbleibt als "verlorenes Teil" unwiederbringlich im Beton.

Der Transportanker muss mit einer gewissen Mindestverankerungstiefe im Inneren Betonfertigteils platziert werden und gleichzeitig an der Verschalung fixierbar sein, um zu verhindern, dass während des Ausgießens Beton in den Schraubkanal gelangt oder diesen verschließt. Dies führt zu einem vergleichsweise hohen Materialverlust.

Abhilfe kann hier ein aus dem Stand der Technik bekanntes Ankersystem (Seite 90, Katalog der BGW Bohr GmbH: "Build something great", Seiten 1-204, URL: http://www.bgw-bohr.de/pdf/Deutsch_Gesamt.pdf, zuletzt aufgerufen am 2021-04-21) schaffen, bei dem ein vertiefter Einbau des Transportankers durch einen als Zentrierkegel bezeichneten Aussparungskörper ermöglicht wird. Der Aussparungskörper wird gemeinsam mit dem Transportanker und an diesen bzw. an dessen Schraubkanal angrenzend in das Betonfertigteil einbetoniert, kann jedoch durch die kegelförmige Form nach Aushärten des Betonfertigteils aus diesem gelöst und wieder verwendet werden, wodurch der Materialverlust reduziert wird. Im Betonfertigteil entsteht eine Aussparung, wodurch der Schraubkanal des Transportankers zur Kopplung mit dem Abheber zugänglich bleibt. Der Abheber ist hier mit einer Draht- oder Stahlseilschlaufe ausgestattet, in welche bspw. ein Kranhaken eingreifen kann. Nachteilig an dem bekannten Ankersystem ist, dass sich dieses nicht oder nur schlecht für flache oder dünnwandige Betonfertigteile, insbesondere doppelwandige Betonteile, Sandwichkonstruktionen oder Isolierwände, aber auch Betonschächte und- rohre verwenden lässt, weil der Abheber nicht länger an der Außenseite bzw. Oberfläche des Betonfertigteils, sondern vertieft im Bauteilinneren ansetzt. Flache oder dünnwandige Betonfertigteile werden üblicherweise vertikal angehoben, wobei das externe Transport-, Anschlag- oder Zurrmittel, also bspw. der Kranhaken, an der Oberseite am Betonfertigteil angreift.

In Bgw Bohr Gmbh: "Build something great", 31. Mai 2021 (2021-05-31), Seiten 1-233, XP055860946 ist ein Lastaufnahmemittel mit der Artikelnummer D-0650G8 und einem Haftmagnet als Aussparungskörper mit der Artikelnummer HM4-D(S)-30/10M12 offenbart. Einige Geometrien von Lastaufnahmemittel und Haftmagnet sind aufeinander abgestimmt.

Die EP 1 045 087 B1 zeigt einen Transportanker, der vertieft in eine Betonwand eingegossen ist. Um den Transportanker vor Korrosion zu schützen, ist ein Stopfen vorgesehen. Die EP 0 161 652 B1 betrifft eine Anordnung aus Lastaufnahmemittel und Abheber mit einer Tragöse. Das Lastaufnahmemittel umfasst einen Gewindebolzen, der in die Gewindehülse eines Transportankers eingeschraubt wird. Grundsätzlich ist ein radialer Spalt zwischen der Stützplatte und der umlaufenden Begrenzungswandung der Vertiefung vorgesehen.

Auch die US 4 615 554 A zeigt eine Art Lastaufnahmestück. Das Lastaufnahmemittel weist einen konischen Vorsprung auf, der auf der Betonoberfläche in einer Vertiefung aufliegt. Ansonsten verbleibt in radialer Richtung ein Spalt zwischen dem Lastaufnahmestück und der Vertiefung des Betonteils.

Die US 2017 / 0 298 617 A1 zeigt verschiedene, auch längliche, Aussparungskörper zum Anordnen von Transportankern im Beton. Das Lastaufnahmemittel entspricht zylindrischen Wellen mit Außengewinde. Die US 2017 / 0 298 617 A1 offenbart die Merkmale des einleitenden Teils des Anspruchs 1.

Es ist die Aufgabe der vorliegenden Erfindung ein gegenüber dem Stand der Technik verbessertes Transportankersystem zu schaffen, welches kostengünstiger durch geringeren Materialverlust sowie einfacher in der Handhabung ist und für unterschiedliche Betonfertigteile, insbesondere auch flache, dünnwandige und doppelwandige Betonfertigteile, wie Sandwichkonstruktionen oder Isolierwände verwendet werden kann.

Die Aufgabe wird gelöst durch ein Transportankersystem gemäß Anspruch 1 und die Verwendung eines solchen Transportankersystems gemäß Anspruch 5. Vorteilhafte Ausgestaltungen der Erfindung sind den jeweiligen Unteransprüchen zu entnehmen.

Ein Transportankersystem der eingangs näher beschriebenen Art kennzeichnet sich dadurch, dass das Transportankersystem ein Lastaufnahmemittel mit einer Tragöse oder sonstigen Einrichtung zum Einhängen eines oder Verbinden mit einem externen Transport-, Anschlag- oder Zurrmittel umfasst, wobei das Lastaufnahmemittel zum Transport des Betonfertigbauteils in den Schraubkanal des Transportankers einschraubbar ist und eine dem Aussparungskörper entsprechende Au-ßengeometrie aufweist, sodass das Lastaufnahmemittel passgenau in der durch den Aussparungskörper ausgebildeten Aussparung platzierbar ist.

Erfindungsgemäß ist also vorgesehen, den Transportanker mithilfe eines ersten Aussparungskörpers vertieft in das Betonfertigteil einzubetonieren und anschließend, zu dessen Transport mittelbar, über das Lastaufnahmemittel, mit einem externen Transport-, Anschlag- oder Zurrmittel zu koppeln. Beim Verbinden mit dem Transportanker kann das Lastaufnahmemittel ganz oder teilweise im Betonteil versenkt werden. Sobald der Beton des Betonteils erhärtet ist, wird der Aussparungskörper zum Transport durch das Lastaufnahmemittel ersetzt. Das Lastaufnahmemittel ist auch auf den zuvor verwendeten Aussparungskörper der entsprechenden Laststufe abgestimmt, was eine fehlerhafte Zuordnung des Lastaufnahmemittels erschwert oder unmöglich macht. Das Lastaufnahmemittel ist hierzu mit dem Transportanker verschraubbar bzw. in dessen Schraubkanal einschraubbar und schließt vorzugsweise bündig mit der Außenseite des Betonfertigbauteils ab oder steht geringfügig über. Zur Verbindung mit dem externen Transport-, Anschlag- oder Zurrmittel, bspw. einem Kranhaken weist das Lastaufnahmemittel eine Tragöse oder sonstige geeignete Einrichtung auf. Die Außengeometrie des Lastaufnahmemittels entspricht der Außengeometrie des ersten Aussparungskörpers soweit, dass das Lastaufnahmemittel passgenau in die durch den ersten Aussparungskörper erzeugte Aussparung eingesetzt werden kann, damit die beim Transport des Betonfertigteils, insbesondere die beim seitlichen Anheben auftretenden Kräfte optimal aufgenommen und an das Betonfertigbauteil übertragen werden. Durch den vertieften Einbau und den passgenauen Sitz des Lastaufnahmemittels sind die auf den Transportanker, insbesondere auf dessen Schraubkanal bzw. Innengwinde einwirkenden Kräfte bei Quer- oder Schrägzug bzw. beim Drehen des Bauteils im Schwerpunkt minimiert.

Nach dem Transport kann das Lastaufnahmemittel aus dem Schraubkanal des Transportankers ausgeschraubt und (wie auch der Aussparungskörper) für weitere Transporteinsätze anderer Betonfertigteile wiederverwendet werden. Indem also ein Teil des Transportankers zum Transport durch das wiederverwendbare Lastaufnahmemittel ersetzt wird, kann der Materialverlust bei vertieftem Einbau des Transportankers verringert werden, wobei gleichzeitig der Anschlagpunkt für das externe Transportmittel an die Außenseite des Betonfertigteils verlagert wird. Letzteres wiederum ermöglicht die Verwendung eines vertieft eingebauten Transportankers auch zum seitlichen Anheben, insbesondere von flachen, dünn- und/oder doppelwandigen Betonfertigteilen. Indem der Transprotanker an einer seitlichen Fläche des Betonfertigteils, vorzugsweise auf halber Höhe bzw. auf Höhe des Schwerpunkts angeordnet ist, ist die Verbindung mit dem externen Transportmittel bspw. das Einhängen eines Kranhakens oftmals ohne zusätzliche Hilfsmittel wie Leitern möglich, wodurch die Handhabung wesentlich erleichtert ist.

Um Betonfertigteile in alle Richtungen, also Axialzug, Schrägzug und/oder Querzug bewegen zu können, können Transportanker eine formschlüssig in das Betonfertigteil einbetonierbare Verankerungsfläche aufweisen. In vorteilhafter Ausgestaltung der Erfindung ist die Querschnittsfläche der Verankerungsfläche größer als die Querschnittsfläche des ersten Aussparungskörpers.

Die Verankerungsfläche bleibt dadurch vom Beton bedeckt. Querschnittsflächen, insbesondere Kreisflächen, vorzugsweise senkrecht zur (Rotations-) Achse von Anker und Aussparungskörper. Die Last beim Anheben wird großflächig auf den die Verankerungsscheibe umgebenden Beton im Betonteil verteilt, sodass sich diese Transportanker besonders für den Einsatz bei flachen, dünnwandigen Bauteilen eignet. Eine großflächige, tief eingebaute Rückverankerung mit einem kleinen Zugang zum Anschlagen des Lastaufnahmemittels ermöglichen einen besonders sicheren Transport des Betonfertigteils. Es ist zusätzlich von Vorteil, wenn die in ein Stahlbetonteil eingebaute Stahlbewehrung durch die Verankerungsfläche zur Aufnahme der Zugkräfte mit angesprochen werden kann. Durch die Verwendung eines großen Verankerungsabschnitts kann gegenüber bekannten Transportankern ein Transportanker mit insgesamt geringerem Gesamtgewicht verwendet werden. Durch die Verwendung kleinerer Transportanker kann teures Metall eingespart werden, welches nach dem Einbetonieren verloren ist. Ein Transportanker in beispielhafter Ausführungsform kann aus Eisenblech mit einem Eigengewicht von ca. 0,07 kg pro Stück hergestellt werden und trägt (durch die Zugmaschine geprüft) ein axiales Gewicht von bis zu 7 Tonnen.

Vorzugsweise umfasst der Transportanker einen zweiten Aussparungskörper, insbesondere in Form einer Hohlkappe, wobei der zweite Aussparungskörper eine Aussparung im Betonfertigbauteil erzeugend und zumindest einen Teil des Schraubkanals des Transportankers ausbildend und/oder umschließend gemeinsam mit dem Transportanker im Inneren des Betonfertigbauteils einbetonierbar ist.

Zusätzlich weisen der erste Aussparungskörper und das Lastaufnahmemittel einen konischen Verlauf auf. Durch den konischen Verlauf, also mit der äußeren Geometrie eines Kegelstumpfes, kann der erste Aussparungskörper nach dem Aushärten des Betonteils wieder leicht aus der Aussparung entnommen werden. Das Lastaufnahmemittel ist dann passgenau konisch zu der durch den Aussparungskörper gebildeten Aussparung ausgebildet.

Ferner weist der Aussparungskörper einen Aussparung-Sockel, gebildet ganz oder teilweise mit dauermagnetischem Material zur Erzeugung einer magnetischen Haftkraft, und einen Aussparung-Vorsprung zur Kopplung mit einem Schraubkanal des Transportankers auf. Der Aussparung-Vorsprung dient zur Kopplung mit dem Schraubkanal des Transportankers unter Ausbildung einer durch eine magnetische Haftkraft zusammengehaltenen Steckverbindung und stellt eine möglichst kleine Öffnung im Betonfertigteil als Zugang zum Schraubkanal für das Lastaufnahmemittel bereit. Durch den Aussparung-Vorsprung können Schraubkanal und Verankerungsfläche des Transportankers unterhalb der Betonoberfläche angeordnet werden. Je größer die Betonmasse zwischen der Betonteilwandung und dem Transportanker, insbesondere dessen Verankerungsfläche, desto eher wird beim Anheben durch das Lastaufnahmemittel ein Ausreißen verhindert. Je tiefer der Transportanker im Beton eingebaut ist, bspw. ein Abstand von 50-60 Millimetern zur Betonoberfläche, desto größer ist der Ausbruchkegel beim Ausreißen aus dem Beton. Ein Betonfertigteilwerk muss nur einen Transportanker auf Lager halten, um verschieden schwere Betonteile zu transportieren. Die Lagerfläche zum Lagern verschiedener Transportanker kann reduziert werden. Ein weiterer Vorteil eines vertieft eingebauten Transportankers besteht darin, dass das Metall vor dem Einbau des Betonteils fast vollständig mit Beton umgeben ist, wodurch der Transportanker dauerhaft von der Umgebung durch eine Betondecke abgeschirmt bleibt. Edelstahl als Material für den Transportanker kann entfallen, was die Kosten für das Transportankersystem weiter senkt.

Vorzugsweise ist das Lastaufnahmemittel zum Verbinden eines Abhebers mit dem Transportanker zum Anheben des Betonfertigteils ausgebildet.

Das Lastaufnahmemittel kann alternativ einstückig mit einem Abheber ausgebildet sein. Der Lastaufnahmemittel-Sockel und/oder der Lastaufnahmemittel-Vorsprung sind für einen passgenauen Eingriff beim Anheben des Betonteils mit der durch den ersten Aussparungskörper gebildeten Aussparung ausgebildet. Die Seitenwandung der Aussparung bildet eine Anschlagfläche für das Lastaufnahmemittel, um das Betonteil anzuheben. Der Transportanker hält das Lastaufnahmemittel in Verbindung mit dem Betonteil, während die Last beim Anheben wenigstens teilweise durch das Lastaufnahmemittel übernommen wird. Das Betonteil liegt quasi auf dem eingedrehten Lastaufnahmemittel auf. Die Druck- oder Querkräfte beim Anheben können damit durch den Beton des Betonteils selbst aufgenommen werden. Insbesondere die Querkräfte werden in den umgebenden Beton und ggf. die eingebaute Bewehrung eingetragen. Die Querkräfte beim Anheben können deshalb nicht auf den Schraubkanal wirken, was den Transport des Betonteils sicherer macht.

Gemäß der zuvor beschriebenen Ausführungen der Erfindung lässt sich jeweils der Materialbedarf des im Betonfertigteil verlorenen Transportankers minimieren, Lastaufnahmemittel und Aussparungskörper können wiederverwendet werden, wodurch sich die Gesamtkosten des Transportankersystems verringern lassen. Der Transportanker stellt daher das einzige Bauteil dar, welches regelmäßig ersetzt werden muss.

Durch den Transportanker wird eine (weitere) Materialeinsparung und Gewichtsreduzierung ermöglicht und gleichzeitig die Verwendung für Betonfertigteile mit besonders dünner Wandstärke verbessert.

Der des Transportankersystems weist einen Schraubkanal auf, in den ein Lastaufnahmemittel des Transportankersystems einschraubbar ist und umfasst einen zweiten Aussparungskörper, insbesondere in Form einer Hohlkappe, wobei der zweite Aussparungskörper eine Aussparung im Betonfertigbauteil erzeugend und zumindest einen Teil des Schraubkanals des Transportankers ausbildend gemeinsam mit dem Transportanker im Inneren des Betonfertigbauteils nicht lösbar einbetonierbar ist.

Der zweite Aussparungskörper verbleibt ebenfalls im Betonfertigteil, ermöglicht aber weitere Materialeinsparung durch einen verkürzten metallischen Gewindeabschnitt des metallischen Transportankers. Der zweite Aussparungskörper verlängert den Schraubkanal des Transportankers, sodass sich ein Hohlraum/Leerraum/Einschraubraum, insbesondere eine Kammer, im Betonfertigteil ausbilden kann. In der Kammer kann sich Schmutz, der in den Transportanker fällt, ansammeln, sodass der Schraubkanal funktionsfähig bleibt. Die Kammer dient auch als Einschraubraum, für längere Gewindebolzen bspw. beim Anflanschen von Montagestützen/Schrägsprießen. Stünde kein solcher Einschraubraum zur Verfügung, würde durch den längeren Gewindebolzen beim Eindrehen der Beton abgesprengt und bspw. zwischen die Wandschichten der Doppelwand fallen. Diese Stellen sind dann Störungen in der Doppelwand, durch die Wasser in das Betonteil eindringen kann. Bei Einbau in eine besonders dünne Betonfertigwand kann der zweite Aussparungskörper im einbetonierten Zustand das Betonfertigteil durchsetzen und verhindern, dass dieses beim Eindrehen der Schraube durchstoßen wird. Gleichzeitig wird auch die, dem Anschlagpunkt abgewandte Seite des Schraubkanals gegenüber eindringendem fließfähigem Beton oder Betonmilch abgedichtet. Ein solch leichter Transportanker ist besonders geeignet für die Betonteilfertigung mittels Roboter. Man kann diese Transportanker in einer Box bereitstellen, aus der die Roboter die Transportanker, wie aus einem Nachlademagazin aufnehmen und dann auf der Schalpalette diese Transportanker zielgenau verschießen. Transportanker und das dazu passende Lastaufnahmemittel sind Teil des Transportankersystems mit einem dem Transportanker zugeordneten Schraubkanal und einem dem Lastaufnahmemittel zugeordneten Gewindebolzen. Das Lastaufnahmemittel wird in den Schraubkanal eingedreht und festgezogen.

In einer bevorzugten Weiterbildung ist der zweite Aussparungskörper auf einen zylindrischen Abschnitt des Transportankers fluiddichtend aufgesteckt oder aufsteckbar.

Die der zylindrische Abschnitt des Transportankers ist vorzugsweise durch Tiefziehen einstückig mit der Verankerungsscheibe hergestellt. Der Einsatz eines fluiddichten Verschlusses auf den zylindrischen oder ein sonstiges ein Innengewinde aufweisenden Abschnitt, bspw. eine Verbindungshülse, ermöglicht die Verwendung des Transportankers für Betonteile, weil dadurch der Schraubkanal beim Herstellen des Betonteils beidseitig gegenüber eindringendem fließfähigen Beton gesichert wird. Die erste Öffnung des Schraubkanals wird durch die Befestigung an oder mit der Verschalungswandung abgedichtet, die zweite Öffnung ist mit einem fluiddichten Verschluss gesichert. Der Aussparungskörper weist einen Boden und eine im Wesentlichen zylindrische Steckhülse auf, wobei der Innendurchmesser der Steckhülse im Wesentlichen dem Außendurchmesser des zylindrischen Abschnitts des Transportankers entspricht. Die Innenwandung der Steckhülse bildet eine fluiddichtende, insbesondere reib- oder formschlüssige, Steckverbindung mit der Außenwandung des zylindrischen Abschnitts aus.

Bevorzugt ist der zweite Aussparungskörper als Hohlkappe aus Kunststoff ausgebildet. Durch die Verwendung von Kunststoff kann weiter Metall eingespart werden. In einer optionalen Weiterbildung der Erfindung bildet der Aussparungskörper eine Stoßstelle mit der Verankerungsfläche aus.

Die axiale Länge der Steckhülse des zweiten Aussparungskörpers entspricht vorzugsweise mindestens der Länge des zylindrischen Abschnitts des Transportankers. Die Stoßstelle bzw. der Anschlag zwischen Kappe und Verankerungsfläche dichtet den Schraubkanal zusätzlich gegenüber fließfähigem Beton ab. Zudem ermöglicht der Anschlag des zweiten Aussparungskörpers an der Verankerungsscheibe eine fehlerfreie Montage.

Die zur Lösung der eingangs gestellten Erfindungsaufgabe erforderliche technische Wirkung wird auch durch eine Verwendung eines erfindungsgemäßen Transportankersystems zum Transport einer Betondoppelwand gemäß Anspruch 5 erzielt.

Die Betondoppelwand weist eine erste Wandschicht, insbesondere Vorsatzschicht, und einen der ersten Wandschicht zugeordneten ersten Transportanker, eine zweite Wandschicht, insbesondere Tragschicht, und einen der zweiten Wandschicht zugeordneten zweiten Transportanker auf, wobei die erste Wandschicht und die zweite Wandschicht eine der Umgebung zugewandte Außenwandung und eine der Zwischenwandschicht zugewandte Innenwandung aufweisen und die Außenwandung einen durch den ersten Aussparungskörper gebildeten Zugang für das Lastaufnahmemittel zum Transportanker aufweist.

Die Transportanker der einzelnen Wandschichten werden den Außenwandungen zugeordnet. Das Transportankermaterial im Zwischenraum kann auch eingespart werden, so auch Querstrebe und Ankerbügel, womit auch unerwünschte Kältebrücken entfallen. Die mindestens zwei Transportanker sind Anschlagpunkte für Lastaufnahmemittel und stehen dauerhaft oder beim Anheben miteinander über ein externes Transportmittel in Verbindung. Diese beiden Anschlagpunkte teilen sich die Last beim Anheben des Betonteils. Der Transportanker ist in Transportstellung der Doppelwand also für das Koppeln mit dem Lastaufnahmemittel nicht von oben, sondern seitlich zugänglich. Eine Leiter zum Koppeln der Lastaufnahmemittel mit dem Transportanker kann auch entfallen. Das Setzen der Transportanker erfolgt nicht mehr durch Einbau in den Bewehrungskorb, sondern durch magnetisches Anhaften an einer Verschalungswandung. Das Setzen kann von Hand oder mittels Roboter erfolgen, was nur wenige Sekunden in Anspruch nimmt. Das Vorratsmagazin eines solchen Roboters kann mit mehreren Transportankern geladen werden, sodass mehrere Transportanker in kurzer Zeit auf der Verschalungswandung gesetzt werden können. Dadurch kann die Herstellung der Doppelwand weiter beschleunigt werden. Das Einbauen der Ankerbügel in die Bewehrung entfällt, womit mehrere Minuten Arbeitszeit pro Betonteil eingespart werden. Anstelle langer, tief in das Betonteil eintauchender Verankerungsschenkel bekannter Doppelwandtransportanker kann durch die erfindungsgemäße Verwendung viel verlorenes Material für die Transportanker eingespart werden, das nichts zur Stabilität des Betonteils beiträgt und auch sonst keinen Vorteil im Betonteil hat. Zusätzliche Maßnahmen, um ein Ausreißen der Transportanker beim Aufrichten (Schrägzug) zu vermeiden, können entfallen. Insbesondere bei Verwendung für Sandwichplatten können Einbaufehler vermieden werden

Bevorzugt werden im Rahmen der Verwendung des Transportankersystems Transportanker mit Mittelachsen verwendet, wobei die Mittelachsen koaxial zueinander angeordnet werden.

Die Mittelachsen der Transportanker sind paarweise in einer Flucht bzw. koaxial zueinander angeordnet. Koaxial oder gleichachsig ist in der Geometrie allgemein die Bezeichnung für übereinstimmende Rotations- oder Mittelachsen dreidimensionaler Elemente. Das Lastaufnahmemittel verbindet die Transportanker mit einer Traverse. Im Rahmen einer solchen Transportanordnung kann das Betonteil um die Mittelachsen der Transportanker gedreht, rotiert oder geschwenkt werden. Die Drehachse des Betonteils liegt vorzugsweise in der Schwerachse, damit beim Transportieren Spannungen und Biege- oder Torsionsmomente in der Transportanordnung vermieden werden. Der Hebestrang ist bspw. ein Seil, eine Kette, ein Gurt oder ein Band. Der Hebestrang hat eine ausreichende Länge, sodass der Werker den Hebestrang mit dem externen Transportmittel verbinden oder lösen kann, ohne eine Leiter nutzen zu müssen. Vielmehr kann das Lösen oder Verbinden des Hebestrangs durch Anheben oder Absenken eines Kranhakens erfolgen. Für die leiterlose Baustelle wird ferner vorgeschlagen diese Transportanker in einer Höhe in der Betonwand anzuordnen, die für einen Werker ohne Leiter mit einem Ackuschrauber erreichbar ist.

Vorzugsweise werden im Rahmen der Verwendung die Wandschichten von dem Transportanker durchsetzt. Die Verankerungsfläche ist an oder im Bereich einer Öffnung des Schraubkanals angeordnet und vom Lastaufnahmemittel durchsetzbar. Die Verankerungsfläche wird von dem Beton des Betonteils umschlossen oder umhüllt und ist damit formschlüssig im Betonteil angeordnet. Zusätzlich kann auch der zweite Aussparungskörper außenseitig vollständig von Beton bedeckt sein.

Weitere Einzelheiten, Merkmale, Merkmals(unter) kombinationen, Vorteile und Wirkungen auf der Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: ein erfindungsgemäßes Transportankersystem in perspektivischer Darstellung in einer beispielhaften Ausführungsform,
- Fig. 2: einen Abheber mit Lastaufnahmemittel in perspektivischer Darstellung in einer beispielhaften Ausführungsform,
- Fig. 3: einen Transportanker in perspektivischer Darstellung in einer beispielhaften Ausführungsform,
- Fig. 4: eine Prinzipskizze einer erfindungsgemäßen Verwendung eines Transportankersystems in einer beispielhaften Ausführungsform
- Fig. 5: eine Prinzipskizze eines vertieft eingebauten Transportankers in einer beispielhaften Ausführungsform,
- Fig. 6: einen Transportanker im Betonteil in einer beispielhaften Ausführungsform in perspektivischer Darstellung, in
- Fig. 7: einen Transportanker mit einem Aussparungskörper bzw. Lastaufnahmemittel in einer beispielhaften Ausführungsform in perspektivischer Darstellung, in
- Fig. 8: Verwendung eines Transportankersystems in einer beispielhaften Ausführungsform der Erfindung in perspektivischer Darstellung und in
- Fig. 9: ein Werkzeug zur Montage einer Transportanordnung in einer beispielhaften Ausführungsform in perspektivischer Darstellung.

Die Figuren sind lediglich beispielhafter Natur und dienen nur dem Verständnis der Erfindung. Die gleichen Elemente sind mit denselben Bezugszeichen versehen.

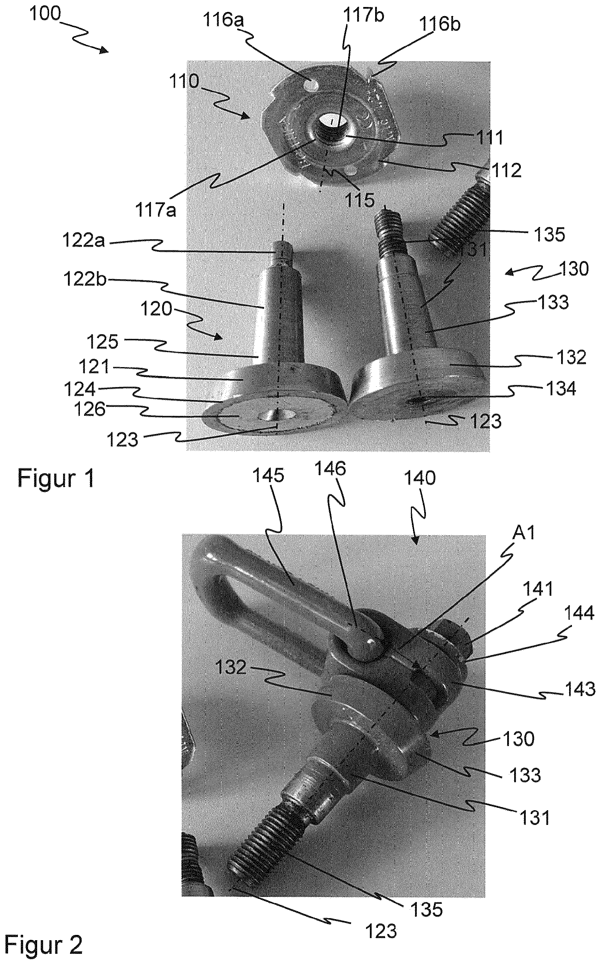

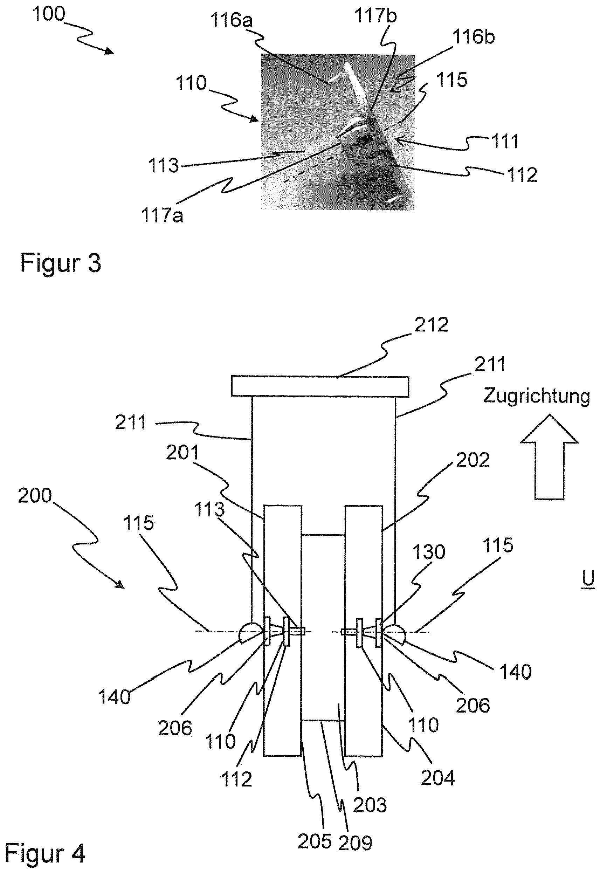

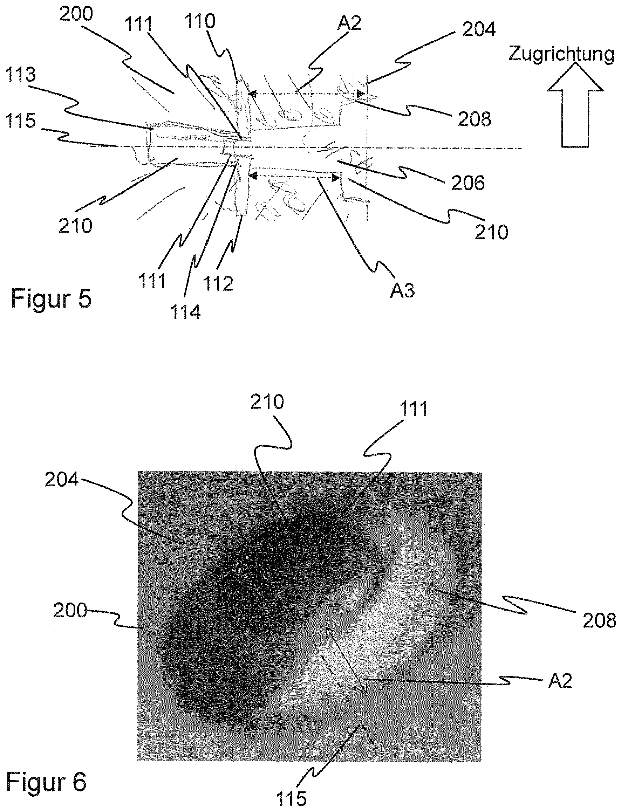

Figur 1 zeigt ein Transportankersystem 100 zum Transportieren eines Betonfertigteils 200 (vgl. Fig. 4). Mithilfe des ersten Aussparungskörpers 120 des Systems 100 wird der Transportanker 110 im Betonteil 200 platziert. Beim Anheben koppelt ein Lastaufnahmemittel 130 des Systems 100 mit dem Transportanker 110. Der Transportanker 110 besteht aus einem zylindrischen Abschnitt, bspw. einer Verbindungshülse, mit einem Schraubkanal 111 zum Verbinden des Transportankers 110 mit einem Lastaufnahmemittel 130 und einer Verankerungsfläche 112. Die Verankerungsfläche 112 kann Krampen 116a und Annagellöcher 116b aufweisen, womit der Transportanker 110 auch zum Transport von Holzteilen geeignet ist. Der Schraubkanal 111 weist ein Innengewinde, eine erste Stirnseite 117a und eine zweite Stirnseite 117b auf. Die Verankerungsfläche 112 ist an der ersten Stirnseite 117a des Schraubkanals 111 angeordnet und von dem Lastaufnahmemittel 130 in Transportstellung durchsetzt. Auf den zylindrischen Abschnitt des Transportankers 110 ist an der zweiten Stirnseite 117b ein fluiddichtender zweiter Aussparungskörper 113 aufsteckbar. Zum vertieften Anordnen des Transportankers 110 im Betonteil 200 (vgl. Fig. 5) wird der erste Aussparungskörper 120 benötigt. Die äußere Geometrie des Aussparungskörpers 120 ist rotationssymmetrisch um eine Rotationsachse 123 ausgebildet. Auf oder im Bereich der zweiten Seite 125 des Aussparungskörpers 120 schließt an den Aussparung-Sockel 121 ein Aussparung-Vorsprung 122 an, der in einen ersten Vorsprung-Abschnitt 122a und in einen zweiten Vorsprung-Abschnitt 122b unterteilbar ist. Der erste Vorsprung-Abschnitt 122a weist eine Mantelfläche zur Ausbildung des magnetischen Haftkontakts mit dem Innengewinde des Transportankers 110 auf. Alternativ kann der erste Vorsprung-Abschnitt 122a ein Außengewinde (nicht dargestellt) aufweisen. Der zweite Vorsprung-Abschnitt 122b stellt zusammen mit dem Aussparung-Sockel 121 einen Abstand A2 bzw. A3 zwischen der Außenwandung 204 (vgl. Fig.4) und dem Transportanker 110 für einen vertieften Einbau des Transportankers 110 im Betonfertigteil 200 bereit. Der zweite Vorsprung-Abschnitt 122b des Aussparung-Vorsprungs 122 verjüngt sich konisch ausgehend von dem Sockel 121 hin zum ersten Vorsprung-Abschnitt 122a. Auch der Aussparung-Sockel 121 verjüngt sich konisch ausgehend von der ersten Seite 124 des Aussparungskörpers 120. Durch die konischen Verläufe, insbesondere die Ausbildung als Kegelstumpf, des Sockels 121 und des Aussparung-Vorsprungs 122 kann der erste Aussparungskörper 120 aus dem erhärteten Betonteil 200 leichter entnommen werden. In der ersten Seite 124 ist ein Dauermagnet 126 zur magnetisch haftenden Befestigung des Transportankers 110 an der Verschalungswandung beim Herstellen des Betonteils 200 versenkt. Das System 100 umfasst ferner ein rotationssymmetrisches Lastaufnahmemittel 130 für ein externes Transportmittel. Das Lastaufnahmemittel 130 weist einen Lastaufnahmemittel-Vorsprung 131 oder eine sonstige Verlängerung an einem Lastaufnahmemittel-Sockel 132 auf, um im Falle eines vertieften Einbaus der Verbindungshülse im Betonteil 200 den Schraubkanal 111 mit dem Abheber 140 zu verbinden. Die Haltefläche 133 des Lastaufnahmemittels 130 bildet sich durch den Sockel 132 und den Vorsprung 131 des Lastaufnahmemittels 130. Das Lastaufnahmemittel 130 weist eine Vertiefung 134 mit einem Innengewinde auf, sodass das Lastaufnahmemittel 130 auf einen Gewindebolzen eines Abhebers 140 (vgl. Fig.2) aufschraubbar ist. Der Gewindebolzen 135 des Lastaufnahmemittels 130 weist einen Außengewindeabschnitt auf, der komplementär zum Innengewinde des Transportankers 110 ausgebildet ist. Durch Ausbildung des Aussparungskörper 120 mit entsprechender Außengeometrie ist das Lastaufnahmemittel 130 passgenau in der durch den Aussparungskörper 120 ausgebildeten Aussparung 210 platzierbar.

Figur 2 zeigt einen Abheber 140 und ein Lastaufnahmemittel 130 zum Einhängen in ein externes Transportmittel (vgl. Fig. 4). Der als Montagekopf 141 dienende Schraubenkopf besitzt eine Vertiefung (nicht dargestellt) als Aufnahme für einen Innensechskantschlüssel oder einen Außensechskant. Der Wirbelbock 143 weist einen Durchgang auf, der von einem Gewindebolzen (nicht dargestellt) der Montageschraube des Montagekopfes 141 durchsetzt ist, sodass ein Gewindeabschnitt (Vatergewinde) mit einem Außengewinde wenigstens abschnittsweise zum Einschrauben in die Vertiefung 134 (Muttergewinde-vgl. Fig.1) des Lastaufnahmemittels 130 verfügbar ist. Der Gewindebolzen 135 kann in den Transportanker 110 (vgl. Fig. 1) eingeschraubt werden. Der Gewindebolzen 135 ist um die Rotationsachse 123 bzw. die Längsachse des Gewindeabschnitts im Abheber 140 rotierbar gelagert, quasi ein erstes Gelenk zum Ausrichten des Abhebers 140. Der Durchgang des Wirbelbocks 143 ist ferner von einer Lagerbuchse 144 durchsetzt. Vorzugsweise ist der Gewindebolzen 135 in der Lagerbuchse 144 frei um die Rotationsachse 123 rotierbar gelagert. Der Gewindebolzen 135 ist durch den Halteflansch der Lagerbuchse 144 gegen eine axiale Verschiebung entlang der Rotationsachse 123 gesichert. Ein Anschlagauge 145 ist um eine Schwenkachse 146 schwenkbar gelagert, quasi ein zweites Gelenk zum Ausrichten des Abhebers 140. In der dargestellten Abheber-Variante 140 weisen Schwenkachse 146 und Rotationsachse 123 einen Abstand A1 zueinander auf. Auf den Abheber 140 ist das rotationssymmetrische Lastaufnahmemittel 130 des Systems 100 (vgl. Figur 1) aufgeschraubt zum Bereitstellen einer Haltefläche 133 oder sonstigen Anschlagfläche mit einer Seitenwandung 208 (vgl. Fig 6) des anzuhebenden Betonteils 200 (vgl. Fig. 4).

Figur 3 zeigt einen Transportanker 110 für ein Transportankersystem 100 mit einem Schraubkanal 111, in den das Lastaufnahmemittel 130 einschraubbar ist. Der Transportanker 110 weist eine formschlüssig in das Betonfertigteil 200 einbetonierbare Verankerungsfläche 112 und einen zweiten Aussparungskörper 113, insbesondere in Form einer Hohlkappe auf und ist eine Aussparung 210 im Betonfertigbauteil 200 erzeugend und zumindest einen Teil des Schraubkanals 111 des Transportankers ausbildend gemeinsam mit dem Transportanker 110 im Inneren des Betonfertigbauteils 200 einbetonierbar.

Figur 4 zeigt eine die Verwendung des Systems 100 zum Anheben oder Aufrichten einer Doppelwand 200. Die Doppelwand 200 weist eine erste Wandschicht 201, eine zweite Wandschicht 202 und eine Zwischenwandschicht 203 auf. Jeder Wandschicht 201,202 ist ein Transportanker 110 mit einer Mittelachse 115 zugeordnet, wobei die Mittelachsen 115 der Transportanker 110 koaxial zueinander angeordnet sind. Die Transportanker 110 sind von der der Umgebung U zugewandten Außenwandung 204 aus über einen Zugang 206 für ein Lastaufnahmemittel 130 erreichbar. Besonders gut geeignet für eine solche Transportanordnung ist ein Transportanker 110 gemäß Figur 3, wobei der zweite Aussparungskörper 113 hier die Wandschichten 201,202 durchsetzt. Das Betonteil 200 umfasst eine Aussparung 210 für den Zugang 206 des Lastaufnahmemittels 130. Durch die Aussparung 210 ist der Schraubkanal 111 und die Verankerungsfläche 112 des Transportankers 110 gegenüber der Außenwandung 204 des Betonteils 200 vertieft oder mit Abstand A2 angeordnet. Das Transportmittel zum Koppeln des Betonteils 200 mit einem Kranhaken weist einen Hebestrang 211 auf, wobei der Hebestrang 211 die Transportanker 110 miteinander und mit dem Kranhaken verbindet. Damit man Betonteile 200 im Schwerpunkt drehen kann, dürfen die Hebestränge 211 nicht am Betonteil 200 anliegen. Die Hebestränge 211 verlaufen parallel entlang der Außenwandung 204, d.h. 90° zu den Mittelachsen 115, und werden durch eine Traverse 212 miteinander verbunden. Die eingezeichnete Zugrichtung beim Anheben verläuft damit auch in etwa im rechten Winkel zu den Mittelachsen 115,123. Die Traverse 212 kann anschließend mit dem Kranhaken gekoppelt werden.

Figuren 5 und 6 zeigen einen Transportanker 110 in einem erhärteten Betonteil 200. Die Außenwandung 204 weist einen Zugang 206 für einen Abheber 140 (vgl. Fig. 2) auf. Der Zugang 206 ist durch eine rotationssymmetrische Aussparung 210 des ersten Aussparungskörpers 120 (vgl. Fig. 1) realisiert. Die Aussparung 210 weist eine Seitenwandung 208 für eine Anlage mit dem Lastaufnahmemittel 130 (vgl. Fig. 1) beim Anheben des Betonteils 200 in der eingezeichneten Zugrichtung auf. Gemäß Figur 5 ist auf der der Aussparung 210 abgewandten Seite des Transportankers 110 eine weitere Aussparung 210 angeordnet, die durch eine Hohlkappe bzw. den zweiten Aussparungskörper 113 beim Ausgießen der Verschalung mit Beton gebildet wird. Der zweite Aussparungskörper 210 bildet gleichzeitig einen fluiddichten Verschluss des Schraubkanals 111 gegenüber fließfähigem Beton beim Herstellen eines Betonteils 200.

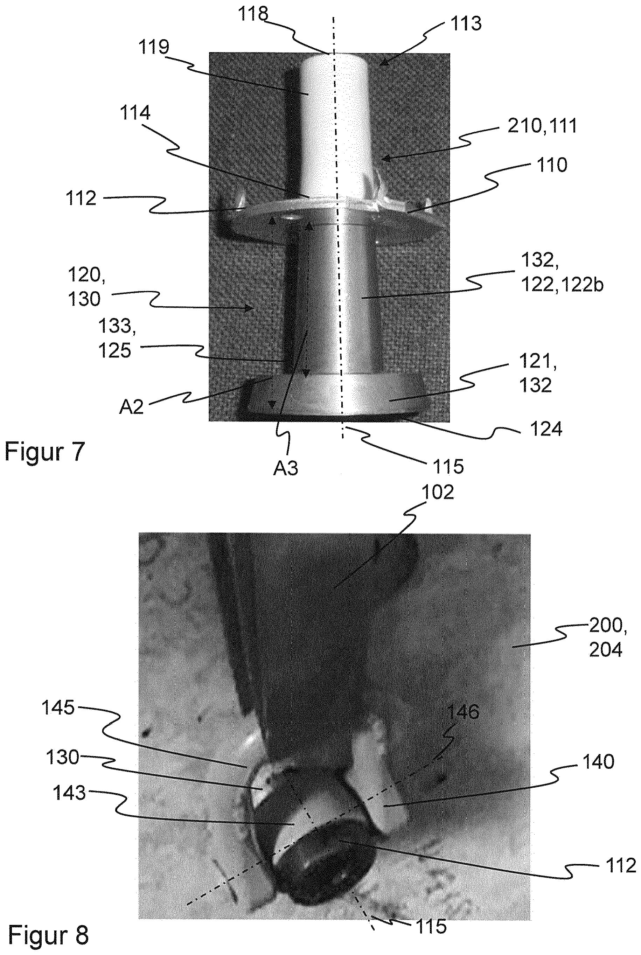

Figur 7 zeigt eine Anordnung zum vertieften Anordnen eines Transportankers 110 im Betonteil 200 und/oder eine Anordnung eines Transportankers 110 und eines Lastaufnahmemittels 130. Die Hohlkappe 113 des Transportankers 110 weist einen Boden 118 und eine im Wesentlichen zylindrische Steckhülse 119 auf und ist fluiddichtend auf die den Schraubkanal 111 enthaltende Verbindungshülse aufgesteckt, sodass die Kappe 113 eine Stoßstelle 114 mit der Verankerungsfläche 112 ausbildet. Die axiale Länge der Steckhülse 119 der Kappe 113 übersteigt die axiale Länge des Schraubkanals 111, sodass die Kappe als zweiter Aussparungskörper 113 eine zusätzliche Aussparung 210 (vgl. Fig. 5), insbesondere eine Kammer, zur Aufnahme des Gewindebolzens 135 des Lastaufnahmemittels 130 aufweist. Das Lastaufnahmemittel 130 überbrückt quasi den Abstand A2 (vgl. Fig. 7) des Transportankers 110 zur Außenwandung 204, sodass eine Zugrichtung mit einem 90°-Winkel zur Rotationsachse 115 realisierbar ist, ohne dass ein Abheber 140, Hebestrang 211 oder sonstiges Transportmittel das Betonteil 200 berühren muss.

Figur 8 zeigt einen Abheber 140, gekoppelt mit dem Betonteil 200. Die Schwenkachse 146 verläuft mit einem 90°-Winkel zur Rotationsachse 115, wobei die Schwenkachse 146 und die Rotationsachse 115 in der dargestellten Abheber-Variante 140 schneiden. Der Wirbelbock 143 ist um die Rotationsachse 115 des Gewindebolzens 135 frei drehbar gelagert. Der Transportanker 110 (durch den Abheber 140 verdeckt) hält den Abheber 140 in der durch den ersten Aussparungskörper 120 (vgl. Fig. 1) und ggf. zweiten Aussparungskörper 113 geschaffenen Aussparung 210 (vgl. Fig. 5) lediglich fest, damit der Abheber 101 nicht aus dieser Aussparung 210 entweichen kann. Der Abheber 140 hält das Betonteil 200 vorrangig durch den das Lastaufnahmemittel 130 umgebenden Beton. Diese Transportanordnung erzeugt ausschließlich oder überwiegend Druckkräfte im Beton, wobei Beton Drucckräfte im Gegensatz zu Zugkräften gut verträgt. Das Betonteil 200 ist in dem Lastaufnahmemittel 130 frei rotierbar um die Mittelachse 115 beim Anheben gelagert. In Transportstellung fallen die Längsachse 123 des Gewindebolzens 135, die Mittelachse des Transportankers 115 und die Rotationsachse des Abhebers 140 zusammen. Das Lastaufnahmemittel 130 überbrückt quasi den Abstand A2 (vgl. Fig. 7) des Transportankers 110 zur Außenwandung 204, sodass eine Zugrichtung mit einem 90°-Winkel zur Rotationsachse 115 realisierbar ist, ohne dass ein Abheber 140, Hebestrang 211 oder sonstiges Transportmittel das Betonteil 200 berühren muss. Zum Verbinden der Abheber 140 miteinander und mit dem Kranhaken ist ein Hebestrang 211 vorgesehen. Dadurch entspricht auch bei asymmetrischen Betonteilen 200 wie Sandwichwänden der Schwerpunkt des Betonteils 200 dem Schwerpunkt der Transportanordnung. Spannungen und Momente treten nicht auf.

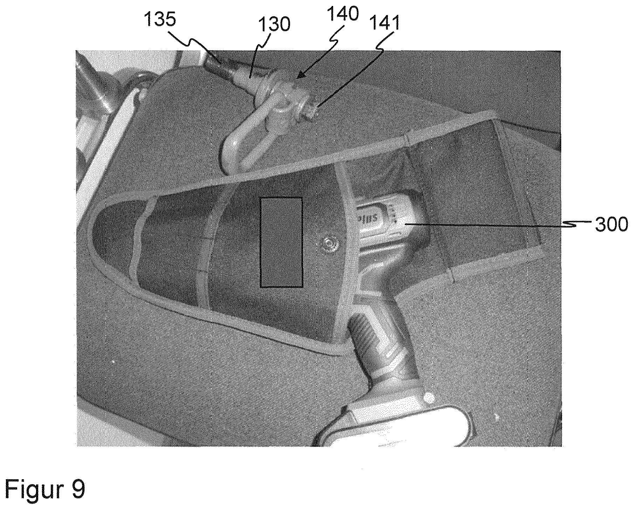

Der Abheber 140 gemäß Fig. 9 zeigt einen Schraubenkopf als Montagekopf 141. Der Schraubenkopf besitzt einen Innensechskant und einen Außensechskant als Anschluss und kann bspw. mit einem komplementären Außensechskantbit oder einem Innensechskantbit eines Akkuschraubers 300 rotiert werden. Der Bit des Ackuschraubers 300 hat freien Zugang zum Montagekopf 141 des Abhebers 140. Die Verwendung eines elektrisch (alternativ auch pneumatisch oder hydraulisch) angetriebenen Werkzeugs 300 löst das Problem, dass die Eindringtiefe bei einem Eindrehen bei Hand oftmals nicht ausreicht, insbesondere wenn der Außengewindeabschnitt des Gewindebolzens 135 nicht mit dem Schraubkanal 111 des Transportankers 110 optimal fluchtet.

### Bezugszeichenliste:

- 100: Transportankersystem
- 110: Transportanker
- 111: Schraubkanal
- 112: Verankerungsfläche
- 113: zweiter Aussparungskörper
- 114: Stoßstelle
- 115: Längsachse, Rotationsachse
- 116a,b: Krampen, Annagellöcher
- 117a,b: erste, zweite Stirnseite
- 118: Boden
- 119: Steckhülse
- 120: erster Aussparungskörper
- 121: Aussparung-Sockel
- 122a,b: Aussparung-Vorsprung
- 123: Rotationsachse, Mittelachse
- 124: erste Seite des Aussparungskörpers
- 125: zweite Seite des Aussparungskörpers
- 126: Permanentmagnet, Dauermagnet
- 130: Lastaufnahmemittel
- 131: Lastaufnahmemittel-Vorsprung
- 132: Lastaufnahmemittel-Sockel
- 133: Haltefläche
- 134: Vertiefung
- 135: Gewindebolzen
- 140: Abheber
- 141: Montagekopf
- 143: Wirbelbock, Lastbock
- 144: Lagerbuchse
- 145: Anschlagauge
- 146: Schwenkachse
- 200: Betonbauteil, Betonfertigbauteil, insbesondere Betondoppelwand
- 201: erste Wandschicht, insbesondere Vorsatzschicht
- 202: zweite Wandschicht, insbesondere Tragschicht
- 203: Zwischenwandschicht oder Leerraumschicht
- 204: erste/zweite Wandung, insbesondere Außenwandung
- 205: Innenwandung
- 206: Zugang
- 208: Seitenwandung
- 209: Gitterträger, insbesondere Verbundanker
- 210: Aussparung, insbesondere Hohlkammer
- 211: Hebestrang
- 212: Traverse
- 300: Akkuschrauber
- A1: Abstand von Rotationsachse und Schwenkachse
- A2: Abstand des Transportankers von der Außenwandung
- A3: Abstand zwischen Sockel und Verankerungsfläche
- U: Umgebung

## Patentansprüche

1. Transportankersystem (100) zum Transportieren von Betonfertigbauteilen (200), insbesondere von dünnwandigen oder doppelwandigen Betonteilen, Sandwichkonstruktionen, Isolierwänden, Betonschächten und- rohren, umfassend
- einen Transportanker (110) mit einem Schraubkanal (111), der nicht lösbar im Inneren des Betonfertigbauteils (200) einbetonierbar ist, sowie
- einen ersten Aussparungskörper (120), der an den Transportanker (110) angrenzend zur Ausbildung einer Aussparung (210) lösbar im Inneren des Betonfertigteils (200) anordenbar ist,
wobei
das Transportankersystem (100) ein Lastaufnahmemittel (130) mit einer Tragöse oder sonstigen Einrichtung zum Einhängen eines oder Verbinden mit einem externen Transport-, Anschlag- oder Zurrmittel umfasst, wobei das Lastaufnahmemittel (130) zum Transport des Betonfertigbauteils (200) in den Schraubkanal (111) des Transportankers (110) einschraubbar ist,
**wobei**
der Aussparungskörper (120) an einer ersten Seite (124) einen Aussparung-Sockel (121), gebildet ganz oder teilweise mit dauermagnetischem Material zur Erzeugung einer magnetischen Haftkraft, und an einer zweiten Seite (125) sowohl einen ersten Vorsprung-Abschnitt (122a) eines Aussparungs-Vorsprungs (122a,122b) zur Kopplung mit dem Schraubkanal (111) des Transportankers (110) als auch onch einen zweiten Vorsprung-Abschnitt (122b) des Aussparung-Vorsprungs (122a,122b) aufweist, wobei der zweite Vorsprung-Abschnitt (122b) des Aussparung-Vorsprungs (122) sich konisch ausgehend von dem Sockel (121) hin zum ersten Vorsprung-Abschnitt (122a) verjüngt und der Aussparung-Sockel (121) sich konisch ausgehend von der ersten Seite (124) zur zweiten Seite (125) des Aussparungskörpers (120) verjüngt
**dadurch gekennzeichnet, dass** das Lastaufnahmemittel (130) eine dem Aussparungskörper (120) entsprechende Außengeometrie aufweist, sodass das Lastaufnahmemittel (130) passgenau in der durch den Aussparungskörper (120) ausgebildeten Aussparung (210) platzierbar ist.

2. Transportankersystem (100) nach Anspruch 1,
**dadurch gekennzeichnet, dass**
der Transportanker (110) eine formschlüssig in das Betonfertigteil (200) einbetonierbare Verankerungsfläche (112) aufweist, deren Querschnittsfläche größer ist als die Querschnittsfläche des ersten Aussparungskörpers (120).

3. Transportankersystem (100) nach einem der Ansprüche 1 oder 2,
**dadurch gekennzeichnet, dass**
der Transportanker (110) einen zweiten Aussparungskörper (113), insbesondere in Form einer Hohlkappe, umfasst, wobei der zweite Aussparungskörper (113) eine Aussparung (210) im Betonfertigbauteil (200) erzeugend und zumindest einen Teil des Schraubkanals (111) des Transportankers ausbildend und/oder umschließend gemeinsam mit dem Transportanker (110) im Inneren des Betonfertigbauteils (200) einbetonierbar ist.

4. Transportankersystem (100) nach einem der vorhergehenden Ansprüche,
**dadurch gekennzeichnet, dass**
das Lastaufnahmemittel (130) zum Verbinden eines Abhebers (140) mit dem Transportanker (110) zum Anheben des Betonfertigteils (200) ausgebildet ist.

5. Verwendung eines Transportankersystems (100) nach den Ansprüchen 1-4 zum Transport einer Betondoppelwand (200), wobei die Betondoppelwand (200) eine erste Wandschicht (201), mit einem ersten Transportanker (110) und eine zweite Wandschicht (202) mit einem zweiten Transportanker (110) aufweist, wobei die erste Wandschicht (201) und die zweite Wandschicht (202) eine der Umgebung (U) zugewandte Außenwandung (204) und eine der Zwischenwandschicht (203) zugewandte Innenwandung (205) aufweisen und die Außenwandungen (204) jeweils einen durch den ersten Aussparungskörper (120) gebildeten Zugang (206) für das Lastaufnahmemittel (130) zum Transportanker (110) aufweisen.

6. Verwendung eines Transportankersystems (100) nach Anspruch 5, **dadurch gekennzeichnet, dass** der erste und der zweite Transportanker (110) Mittelachsen (115) aufweisen und die Mittelachsen (115) koaxial zueinander angeordnet werden.

7. Verwendung eines Transportankersystems (100) nach einem der Ansprüche 4 oder 5, **dadurch gekennzeichnet, dass** die Wandschichten (201, 202) von dem Transportanker (110) durchsetzt werden.

## Claims

1. Transport anchor system (100) for transporting precast concrete components (200), in particular thin-walled or double-walled concrete parts, sandwich constructions, insulating walls, concrete shafts and pipes, comprising
- a transport anchor (110) with a screw channel (111), which is non-detachably concrete-cast in the interior of the precast concrete component (200), and
- a first pocket former (120), which can be detachably arranged in the interior of the precast concrete part (200) adjacent to the transport anchor (110) to form a pocket (210),
wherein
the transport anchor system (100) comprises a load receiving means (130) with a lifting eyelet or other device for hanging or connecting to an external transport, sling or lashing means, wherein the load receiving means (130) can be screwed into the screw channel (111) of the transport anchor (110) to transport the precast concrete component (200)
**wherein**
the first pocket former (120) on a first side (124) has a pocket base (121), formed entirely or partially with permanent magnetic material to generate a magnetic holding force,
and on a second side (125) has a first projection section (122a) of a pocket projection (122a, 122b) for coupling to a screw channel (111) of the transport anchor (110) and a second projection section (122b) of the pocket projection (122a, 122b), wherein the second projection section (122b) of the pocket projection (122a, 122b) tapers conically, stating from base (121) towards the first projection section (122a) and the pocket base (121) tapers conically starting from the first side (124) towards the second side (125) of the pocket former
**characterised in that**
the load receiving means (130) has an external geometry corresponding to the pocket former (120), so that the load receiving means (130) can be placed precisely in the pocket (210) formed by the pocket former (120).

2. Transport anchor system (100) according to claim 1,
**characterized in that**
the transport anchor (110) has a form-fit, concrete-cast precast concrete components (200), anchoring surface (112), the cross-sectional area of which is larger than the cross-sectional area of the first pocket former (120).

3. Transport anchor system (100) according to one of claims 1 or 2,
**characterized in that**
the transport anchor (110) comprises a second pocket former (113), in particular in the form of a hollow cap, wherein the second pocket former (113) has a pocket (210) in the precast concrete component (200) and forming and/or enclosing at least part of the screw channel (111) of the transport anchor can be concrete-cast together with the transport anchor (110) in the interior of the precast concrete component (200).

4. Transport anchor system (100) according to one of the preceding claims,
**characterized in that**
the load receiving means (130) is designed to connect a lifting shackle (140) to the transport anchor (110) for lifting the precast concrete part (200).

5. Use of a transport anchor system (100) according to claims 1-4 for transporting a concrete double wall (200), wherein the concrete double wall (200) has a first wall layer (201) with a first transport anchor (110) and a second wall layer (202) with a second Transport anchor (110), wherein the first wall layer (201) and the second wall layer (202) have an outer wall (204) facing the environment (U) and an inner wall (205) facing the intermediate wall layer (203), and the outer walls (204) each have an access (206) formed by the first pocket former (120) for the load receiving means (130) to the transport anchor (110).

6. Use of a transport anchor system (100) according to claim 5, **characterized in that** the first and second transport anchors (110) have central axes (115) and the central axes (115) are arranged coaxially to one another.

7. Use of a transport anchor system (100) according to one of claims 4 or 5, **characterized in that** the wall layers (201, 202) are interspersed with the transport anchor (110).

## Revendications

1. Système d'ancrage de transport (100) pour le transport d'éléments de construction préfabriqués en béton (200), en particulier d'éléments en béton à paroi mince ou à double paroi, de constructions en sandwich, de parois isolantes, de puits et de tubes en béton, comprenant
- une ancre de transport (110) ayant un canal de vissage (111) et qui peut être scellée dans le béton sans être détachable à l'intérieur de l'élément de construction préfabriqué en béton (200), ainsi que
- un premier corps à évidement (120), qui peut être placé adjacent sur l'ancre de transport (110), pour former un évidement (210) de manière amovible à l'intérieur de l'élément préfabriqué en béton (200),
dans lequel
le système d'ancrage de transport (100) comprend un moyen de suspension de charge (130) ayant un anneau de suspension ou un autre dispositif pour accrocher ou relier à celui-ci un moyen de transport, d'élingage ou d'arrimage externe, le moyen de suspension de charge (130) pouvant être vissé dans le canal de vissage (111) de l'ancre de transport (110) pour le transport de l'élément préfabriqué en béton (200),
**dans lequel**
le corps à évidement (120) comprend, sur un premier côté (124), une base d'évidement (121) formée entièrement ou en partie avec un matériau magnétique permanent pour générer une force d'adhérence magnétique, et sur un deuxième côté (125), à la fois une première partie en saillie (122a) d'une saillie d'évidement (122a, 122b) pour le couplage avec le canal de vissage (111) de l'ancrage de transport (110) et aussi une deuxième partie en saillie (122b) de la saillie d'évidement (122a, 122b), la deuxième partie en saillie (122b) de la saillie d'évidement (122) se rétrécissant de manière conique à partir de la base (121) vers la première partie en saillie (122a), et la base d'évidement (121) se rétrécissant de manière conique à partir du premier côté (124) vers le deuxième côté (125) du corps à évidement (120),
**caractérisé en ce que**
le moyen de suspension de charge (130) présente une géométrie extérieure correspondant au corps à évidement (120), de sorte que le moyen de suspension de charge (130) peut être placé avec un ajustement précis dans l'évidement (210) formé par le corps à évidement (120).

2. Système d'ancrage de transport (100) selon la revendication 1,
**caractérisé en ce que**
l'ancre de transport (110) présente une surface d'ancrage (112) à engagement positif pouvant être scellée dans le béton dans l'élément préfabriqué en béton (200), dont la surface de section transversale est plus grande que la surface de la section transversale du premier corps à évidement (120).

3. Système d'ancrage de transport (100) selon l'une quelconque des revendications 1 ou 2,
**caractérisé en ce que**
l'ancre de transport (110) comprend un deuxième corps à évidement (113), en particulier sous la forme d'un capuchon creux, dans lequel le deuxième corps à évidement (113) crée un évidement (210) dans l'élément de construction préfabriqué en béton (200) et peut être scellé dans le béton à l'intérieur de l'élément de construction préfabriqué en béton (200) en formant et/ou englobant au moins une partie du canal de vissage (111) conjointement avec l'ancre de transport (110).

4. Système d'ancrage de transport (100) selon l'une quelconque des revendications précédentes,
**caractérisé en ce que**
le moyen de suspension de charge (130) est conçu pour relier un dispositif de levage (140) à l'ancre de transport (110) pour soulever l'élément préfabriqué en béton (200).

5. Utilisation d'un système d'ancrage de transport (100) selon les revendications 1 à 4 pour le transport d'un double mur en béton (200), le double mur en béton (200) comprenant une première couche de mur (201) avec une première ancre de transport (110) et une deuxième couche de mur (202) avec une deuxième ancre de transport (110), la première couche de mur (201) et la deuxième couche de mur (202) présentant une face extérieure (204) tournée vers l'environnement (U) et une face intérieure (205) tournée vers la couche de mur intermédiaire (203), et les faces extérieures (204) présentant chacune un accès (206) formé par le premier corps à évidement (120) pour le moyen de suspension de charge (130) vers l'ancre de transport (110).

6. Utilisation d'un système d'ancrage de transport (100) selon la revendication 5, **caractérisée en ce que** la première et la deuxième ancre de transport (110) présentent des axes centraux {115) et **en ce que** les axes centraux (115) sont disposés coaxialement l'un par rapport à l'autre.

7. Utilisation d'un système d'ancrage de transport (100) selon l'une quelconque des revendications 4 ou 5, **caractérisée en ce que** les couches de mur (201, 202) sont traversées par l'ancre de transport (110).
